# EUROPÄISCHE PATENTANMELDUNG

(11) **EP 2 230 198 A2**
(43) Veröffentlichungstag der Anmeldung: **22.09.2010**
(21) Anmeldenummer: 10154050.8
(22) Anmeldetag: 19.02.2010
(51) Int. Cl.: B65G 17/34

(54) **Behälterförderanlage zum Transportieren von Stückgütern, insbesondere von Gepäckstücken**

(30) Priorität: 20.03.2009 DE 102009014251
(71) Anmelder: SIEMENS AKTIENGESELLSCHAFT, 80333 München (DE)
(72) Erfinder: Brütt, Jörn, 90408, Nürnberg (DE)

(57) **Zusammenfassung**

Die Erfindung betrifft eine Behälterförderanlage zum Transportieren von Gepäckstücken in Behältern (1) und mindestens einer Endladestelle und/oder einer Beladestelle zum Be- bzw. Entladen des Behälters, wobei das Gepäckstück auf einem endlosen Tragband (3) aufliegt, das quer zur Transportrichtung des Behälters (1) um beidseitig des Behälters (1) angeordnete Umlenkwalze (4) antreibbar geführt ist, wobei zum Antreiben im Bereich der Be- und/oder Endladestelle ein stationärer Antrieb (5) vorgesehen ist, der während des Be- und/oder Endladevorganges mit einem am Behälter (1) vorgesehen Antriebselement für das Tragband (3) in Wirkverbindung steht. Um ein Antriebskonzept zu schaffen, das verschleißarm ist und eine hohe Verfügbarkeit der Anlage garantiert, das die Wartungsintervalle minimiert und das eine kostengünstige Alternative zu bekannten Lösungen darstellt, wird vorgeschlagen, dass als stationärer Antrieb (5) für das Tragband (3) in definierten Streckensegmenten jeweils mindestens eine ebene Erregerwicklung (7) zur Erzeugung eines elektrischen Wanderfelds installiert ist, das berührungslos ein auf dem Behälter (1) angeordnetes endlos umlaufendes Läuferelement (8,14) treibt, welches seinerseits getrieblich mit dem Tragband (3) gekoppelt ist.

## Beschreibung

Die Erfindung betrifft eine Behälterförderanlage zum Transportieren von Stückgütern, insbesondere von Gepäckstücken auf einer Förderbahn mit Trag- und Führungselementen für die Behälter und mindestens einer Endladestelle zum Entleeren des Stückgutes aus dem Behälter und/oder mindestens einer Beladestelle zum Beladen des Behälters mit dem Stückgut, wobei das Stückgut beim Transport auf einem endlosen Tragband aufliegt, das quer zur Transportrichtung des Behälters um beidseitig des Behälters angeordnete Umlenkwalze antreibbar geführt ist, wobei zum Antreiben des Tragbandes im Bereich der Be- und/oder Endladestelle ein stationärer Antrieb vorgesehen ist, der zumindest während des Be- und/oder Endladevorganges mit einem am Behälter vorgesehen Antriebselement für das Tragband in Wirkverbindung steht.

Um beliebige Stückgüter, insbesondere Gepäckstücke, wie Taschen und Koffer, aber auch Pakete, einzeln in einem Lasthilfsmittel, z.B. in einem Behälter lagestabil mit hoher Geschwindigkeit über eine weit verzweigte Förderanlage mit vielen Richtungsänderungen zu transportieren und andererseits an vorbestimmten Positionen innerhalb der Förderanlage eine schnelle und kontrollierte Beladung bzw. Trennung von Stückgut und Behälter herbeizuführen, ist es bekannt, Förderanlagen zu verwendet, bei denen relativ einfache aus Kunststoff geformte Behälter auf einer Förderbahn mit Trag-und Führungselementen für den Behälter transportiert werden, die vorzugsweise aus zueinander parallelen endlos umlaufenden Gurten bestehen, auf denen die Behälter aufliegen. Die Beladung erfolgt derart, dass das Stückgut von oben in den Behälter hinein fällt oder hinein rutscht und eine Trennung von Stückgut und Behälter realisiert wird, in dem der Behälter quer zur Förderrichtung gekippt wird.

Die Be- und insbesondere Endladevorrichtungen, die erforderlich sind, um das Stückgut aus den Behältern abzukippen benötigen unabdingbar die Schwerkraft, was wiederum dazu führt, dass das Stückgut extrem beansprucht wird, wenn es seitlich aus der Förderanlage über Rutschen ausgeschleust wird oder beim Beladen in die Behälter hinein geworfen wird. Es ist deshalb bereits vorgeschlagen worden, die aus der Sortiertechnik bekannten Querbandförderer auch für den Transport von Gepäckstücken einzusetzen. Die in der Sortiertechnik verwendeten Querbandförderer bestehen gewöhnlich aus auf einer Förderanlage bewegbaren Fahrzeugen, von denen mehrere zu einem Zug oder zu einer endlos umlaufenden Fahrzeugkette zusammengefügt sind. Die einzelnen Fahrzeuge sind mit einem Traggurt versehen, der quer zur Transportrichtung der Fahrzeuge umlaufend antreibbar ist. Auf dem Traggurt aufliegend wird das Stückgut transportiert und an der gewünschten Endladestelle durch Antreiben des Querbandes seitlich ausgefördert.

Diese Art Fördertechnik ist allerdings in Folge der Abhängigkeit der einzelnen Fahrzeuge von der verlegten Förderstrecke sehr beschränkt einsetzbar und z.B. in großen Flughafenanlagen mit großen Distanzen nicht ohne weiteres verwendbar.

Es wurde deshalb bereits vorgeschlagen, die bekannte, eingangs beschriebene Behältertechnik, bei der passive Behälter auf einer Fördertechnik durch die Anlage transportiert werden und anlagenseitig gelenkt und gesteuert werden, anzuwenden und zur Vermeidung von Schäden an den Stückgutteilen und zur Vereinfachung der Sortiertechnik die passiven Behälter mit einem Tragband ähnlich der vorstehend beschriebenen Querbandförderertechnik zu versehen. Durch Antreiben des Tragbandes im Bereich der Be- und/oder Endladestation lässt sich das Stückgut seitlich aus der Förderanlage ausschleusen, ohne dass die Schwerkraft zum Einsatz kommen muss. Allerdings ist es auch bei dieser Technik erforderlich, das Tragband anzutreiben, um das Austragen des Stückgutes aus dem Behälter zu erreichen. Das erfolgt bei der bekannten Lösung nicht, wie bei Querbandförderern, durch mitgeführte Motoren, sondern durch im Bereich der Be- und/oder Endladestellen vorgesehene stationäre Antriebe , die zumindest während des Be- und/oder Endladevorganges mit mindestens einem am Behälter vorgesehenen Antriebselement für das Tragband koppelbar sind.

Beim Stand der Technik erfolgt die Kopplung reibschlüssig oder formschlüssig. So ist in einem Fall das am Behälter vorgesehene Antriebselement für das Tragband als parallel zur Transportrichtung endlos um Umlenkräder umlaufender Zahnriemen ausgebildet, dessen eines Umlenkrad über ein Winkelgetriebe mit einer der Umlenkwalzen des Tragbandes in Wirkverbindung steht. Der Zahnriemen greift im Bereich der Be- und/oder Endladestelle in einen stationär angeordneten, parallel zu dem ersten Zahnriemen endlos umlaufenden antreibbaren zweiten Zahnriemen formschlüssig ein, dessen Umlaufgeschwindigkeit und Umlaufrichtung steuerbar sind.

Wie die reibschlüssigen Verbindungen unterliegen in verstärktem Maße auch formschlüssige Verbindungen hohem Verschleiß, so dass sich die Zustände in der Anlage im Laufe des Betriebes verändern. Das bedeuten im Fall der nachlassende Reibschlüssigkeit Fehler bei Übertragung des Antriebsmomentes und im Fall verschlissener formschlüssiger Teile Störungen, bis hin zum Ausfall der Anlage.

Aufgabe der vorliegenden Erfindung ist es, ein Antriebskonzept zu schaffen, das die beschriebenen Nachteile nicht aufweist, das insbesondere, weil verschleißarm, zu einer hohen Verfügbarkeit der Anlage führt, das die Wartungsintervalle minimiert und das eine kostengünstige Alternative zu bekannten Lösungen darstellt.

Zur Lösung der Aufgabe wird vorgeschlagen, dass als stationärer Antrieb für das Tragband in definierten Streckensegmenten jeweils mindestens eine ebene Erregerwicklung zur Erzeugung eines elektrischen Wanderfelds installiert ist, das berührungslos ein auf dem Behälter angeordnetes endlos umlaufendes Läuferelement treibt, welches seinerseits getrieblich mit dem Tragband gekoppelt ist. Der Antrieb des Tragbandes erfolgt analog zu elektrischen Linearmotoren berührungslos, so dass praktisch kein Verschleiß an den unmittelbar angetriebenen Teilen zu erwarten ist. Aufwändige mechanische Verbindungsteile zwischen dem stationären Antrieb und dem Antrieb auf dem Behälter entfallen; dadurch werden Wartungsarbeiten minimiert. Da die Wartung der Behälter den Anlagenbetrieb stört und Komplettausfälle defekter Behälter einen unbedingt zu vermeidenden Eingriff in den Anlagenbetrieb darstellen, ergibt sich mit den Vorschlägen der Erfindung ein erheblicher Vorteil für den Betreiber der Anlage.

Nach einem bevorzugten Merkmal der Erfindung ist vorgesehen, dass das Läuferelement als endlose Kette ausgebildet ist, deren mindestens eines Kettentrum mit geringem Abstand zu der Erregerwicklung durch das Wanderfeld um Umlenkräder geführt ist und dass mindestens eines der von der Kette getriebenen Umlenkräder mit mindestens einer der Umlenkwalzen des Tragbandes in Getriebeverbindung steht. Das Wanderfeld der Erregerwicklung treibt somit die Kette an, die ihrerseits über die als Kettenräder ausgebildeten Umlenkräder das Tragband über dessen Umlenkwalzen treibt.

Es ist alternativ auch denkbar, das Läuferelement als Scheibe auszubilden, die um ihre horizontal und quer zu Wirkrichtung des Wanderfeldes ausgerichtete, mit dem Tragband in Getriebeverbindung stehende Drehachse, antreibbar ist, wozu ein Abschnitt der Scheibe in das Wanderfeld hineinragt. Auch bei dieser Alternative ist die Scheibe mit mindestens einer Umlenkwalze antriebsmäßig verbunden.

Da gewöhnlich die Erregerwicklung in Transportrichtung ausgerichtet sein muss und daher auch das Wanderfeld parallel zur Bewegungsrichtung verläuft, muss die Umlenkung des Antriebsmomentes auf das quer zur Transportrichtung verlaufende Tragband erfolgen. Am Einfachsten erfolgt erfindungsgemäß die Getriebeverbindung zwischen Läuferelement und Tragband über einen Riemen- oder Kettentrieb. Es ist aber auch nach einer anderen Ausgestaltung der Erfindung möglich, als Getriebeverbindung zwischen Läuferelement und Tragband ein Winkelgetriebe einzusetzen.

Nach einem besonderen Merkmal der Erfindung wird vorgeschlagen, das als Kette ausgebildete Läuferelement mit auf den Kettengliedern fest angeordneten Schwertern zu bestücken, die sich in der Umlaufebene der Kette berührungslos in das Wanderfeld der Erregerwicklung hinein erstrecken. Die Schwerter bilden den Läufer des Linearantriebes und ermöglichen eine ausreichend große Kraftübertragung auf das mit Stückgut belegte Tragband.

Um sicher zu stellen, dass ein Be- und Endladen des Tragbandes nach beiden Seiten des Transportweges möglich ist, wird vorgeschlagen, dass die Richtung des Wanderfeldes und damit die Laufrichtung des Tragbandes umkehrbar sind.

Die Steuerung des Wanderfeldes in seiner Intensität und Richtung macht einen flexiblen Einsatz des Antriebssystems möglich; das Wanderfeld ist erfindungsgemäß unabhängig von der Transportgeschwindigkeit und dem Stillstand des Behälters aktivierbar.

In einer anderen Ausgestaltung der Behälterförderanlage wird zur Lösung der Aufgabe vorgeschlagen, dass die als stationäres Antriebselement für das Tragband vorgesehene mindestens eine ebene Erregerwicklung im Bereich der Be-und/oder Endladestelle unterhalb des zu be- bzw. entladenden Behälters parallel zur Laufrichtung des Tragbandes angeordnet ist und dass das Tragband über in das Tragband integrierte Läuferelemente von dem richtungsumkehrbaren Wanderfeld antreibbar ist.

Durch beispielsweise in das Tragband, vorzugsweise in dessen Randbereich, integrierte Läuferelemente in Form ferromagnetischer Platten oder von Magneten, die von dem Wanderfeld getrieben werden, kann der Antrieb des Tragbande direkt und berührungslos erfolgen.

Die Erfindung schafft ein weitgehend verschleißfreies Antriebssystem für den Traggurt einer gattungsgemäßen Behälterförderanlage, mit dem die Verfügbarkeit der Anlage durch verminderte mechanische Probleme und geringere Wartungsarbeiten deutlich erhöht werden kann.

Ein Ausführungsbeispiel der Erfindung wird nachfolgend anhand schematischer Zeichnungen erläutert. Es zeigt:
- Figur 1: in grobschematischer Darstellung einen auf einer Förderbahn aufliegenden Behälter,
- Figur 2: einen Schnitt durch den Behälter und das Antriebselement entlang der Schnittlinie II-II in Figur 1,
- Figur 3: eine besondere Ausbildung eines Läuferelementes nach der Erfindung,
- Figur 4: einen Schnitt entlang der Schnittlinie IV-IV in Figur 3,
- Figur 5: das als Scheibe ausgebildete Läuferelement,
- Figur 6: einen Schnitt durch das Läuferelement nach Figur 5 entlang der Schnittlinie VI-VI,
- Figur 7: einen auf der Förderbahn aufliegenden Behälter mit einer Variante des berührungslosen Antriebs und
- Figur 8: einen Querschnitt durch den Behälter und die Förderbahn entlang der Schnittlinie VIII-VIII in Figur 7.

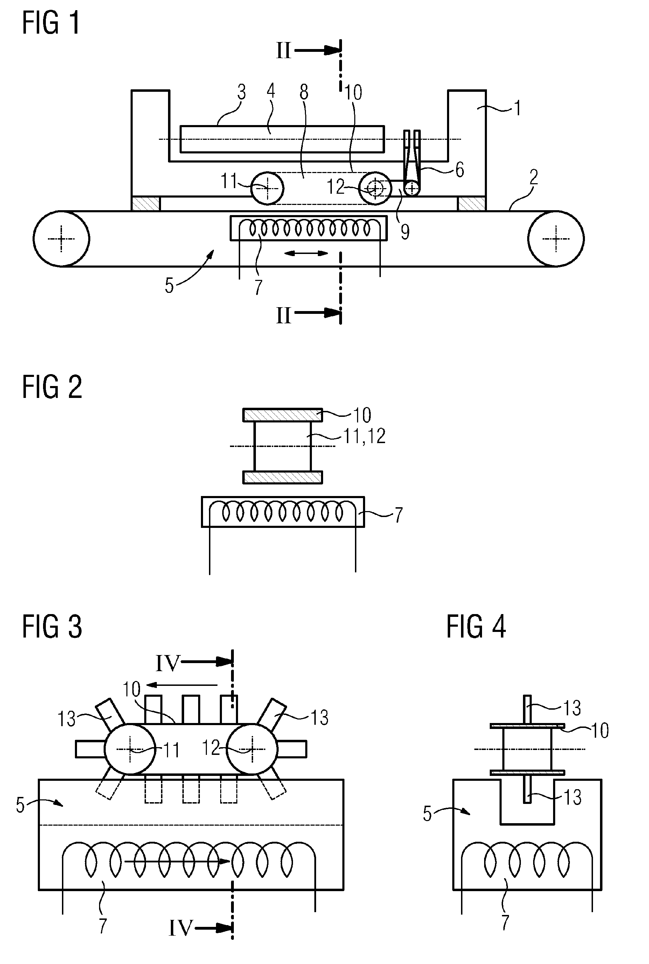

In den Zeichnungsfiguren sind in sehr schematischer Darstellung mehrere Varianten des Tragbandantriebs der Behälter in einer erfindungsgemäßen Behälterförderanlage dargestellt. In Figur 1 ist mit 1 der Behälter bezeichnet, der auf der Förderbahn aufliegt. Die Förderbahn wird durch parallel voneinander beabstandete, endlos angetriebene Transportgurte gebildet, die den Behälter beidseitig aufliegend stützen und (bezogen auf die Zeichnungsebene) nach rechts oder links transportieren können. Jeder aus einer Vielzahl von Behältern ist mit einem Tragband 3 bestückt, das um die beidseitig am Behälter angeordnete Umlenkwalzen quer zur Transportrichtung des Behälters endlos geführt ist und das beim Transport des Behälters auf seinem Obertrum das Stückgut trägt. In nicht dargestellten Be- bzw. Endladestellen wird das Stückgut, beispielsweise Fluggepäck, gesteuert seitlich ausgetragen, in dem das Tragband 3 zum Umlauf um die Umlenkwalzen 4 angetrieben wird. Das Stückgut wird dabei (quer zur Zeichnungsebene) aus dem Behälter bewegt und an der Entnahmestelle, beispielsweise auf einer Rutsche, aufgefangen. Umgekehrt erfolgt das Beladen des Tragbandes 3 von einer Beladestation ausgehend, die das Stückgut auf das in Bewegung gesetzte Tragband 3 abgibt, um es in die Mitte des Behälters 1 zu transportieren und dort, nach Anhalten des Tragbandes 3, zum Weitertransport zu positionieren.

Um das Tragband 3 bei Bedarf, d.h. im Wesentlichen in den Be-und Endladestellen antreiben zu können, ist es erforderlich, Antriebselemente vorzusehen, mit denen die Umlenkwalzen 4 in Drehung versetzt werden können. Die vorliegende Erfindung schlägt vor, als stationären Antrieb 5 für das Tragband 3 eine ebene Erregerwicklung innerhalb des Förderers 2 vorzusehen, die so ausgerichtet ist, dass sie sich parallel zur Transportrichtung des Förderers 2 erstreckt. Diese Erregerwicklung ist insgesamt mit 7 bezeichnet. Die Erregerwicklung 7 erzeugt ein sich linear bewegendes Wanderfeld, mit dessen Hilfe ein Läufer bewegt wird, und zwar ebenfalls parallel zur Transportrichtung des Behälters 1. Das Prinzip ist von Linearmotoren bekannt.

Das Läuferelement 8 ist in Figur 1 mit 8 bezeichnet und besteht aus einer um Umlenkräder 11 und 12 endlos umlaufenden Kette 10, deren Ketten-Untertrum vom Wanderfeld der Erregerwicklung 7 mitgenommen wird. Beim Antrieb des Untertrums der Kette in der Laufrichtung des Wanderfeldes werden die Umlenkräder 11 und 12, die bevorzugt als mit der Kette im Eingriff befindliche Kettenräder ausgebildet sind, ebenfalls angetrieben. Von einem der Umlenkräder, im Beispiel von dem Umlenkrad 12 wird über einen Riementrieb 9 das Antriebsmoment abgegriffen und umgelenkt auf die Umlenkwalze 4 des Tragbandes 3 übertragen. Auf diese Weise lässt sich das Tragband 3 gemeinsam mit einem darauf aufliegenden Stückgutteil in Bewegung gesetzt, so dass das Stückgutteil seitlich ausgetragen wird. Der Aufbau und die Steuerung des Wanderfeldes sind so gewählt, dass sowohl bei Stillstand des Behälters 1 wie auch während dessen Transport auf dem Förderer 2 ein Antrieb des Tragbandes 3 erfolgen kann, in dem das Wanderfeld die Kette des Läuferelements 7 und, davon abgegriffen, die Umlenkwalze 4 in Bewegung versetzt.

Figur 2 zeigt einen Schnitt durch die Anordnung nach Figur 1 entlang der Schnittlinien II-II. Erkennbar ist in dieser schematischen Darstellung eines der Umlenkräder 11, 12 der endlosen Kette 10 sowie, ebenfalls grob schematisch die Erregerwicklung 7, in der das Wanderfeld erzeugt wird.

Figur 3 zeigt eine Variante des Antriebs, bei der das Läuferelement 8 ebenfalls als Kette 10 ausgebildet ist, die über die Umlenkräder 11 und 12 endlos geführt ist, wobei aber die einzelnen Kettenglieder mit darauf angeordneten Schwertern 13 bestückt sind, welche sind ihrerseits berührungslos in das Wanderfeld der Erregerwicklung 7 hinein erstrecken. Die Schwerter 13 der umlaufenden Kette 10 sind gleichmäßig über den Kettenstrang verteilt und tauchen zwischen die Erregerwicklung 7 ein, so dass das Wanderfeld über die Schwerter 13 eine große Mitnahmekraft auf die Kette entwickeln kann. Ein Querschnitt durch diese Ausführung der Kette ist in Figur 4 entlang der Schnittlinie B-B aus Figur 3 dargestellt. Die Übertragung des Antriebsmomentes von der Kette 3 auf die Umlenkwalzen 4 des Tragbandes 3 erfolgt entweder, wie in Figur 1 dargestellt, über Riementriebe 9 oder über ein (nicht dargestelltes) Winkelgetriebe. In beiden Fällen wird über die Kette 10 und deren Umlenkrad 11 oder 12 das Tragband 3 getrieben, wobei die Antriebsenergie über das von der Erregerwicklung 7 erzeugte Wanderfeld auf die Kette 10 übertragen wird.

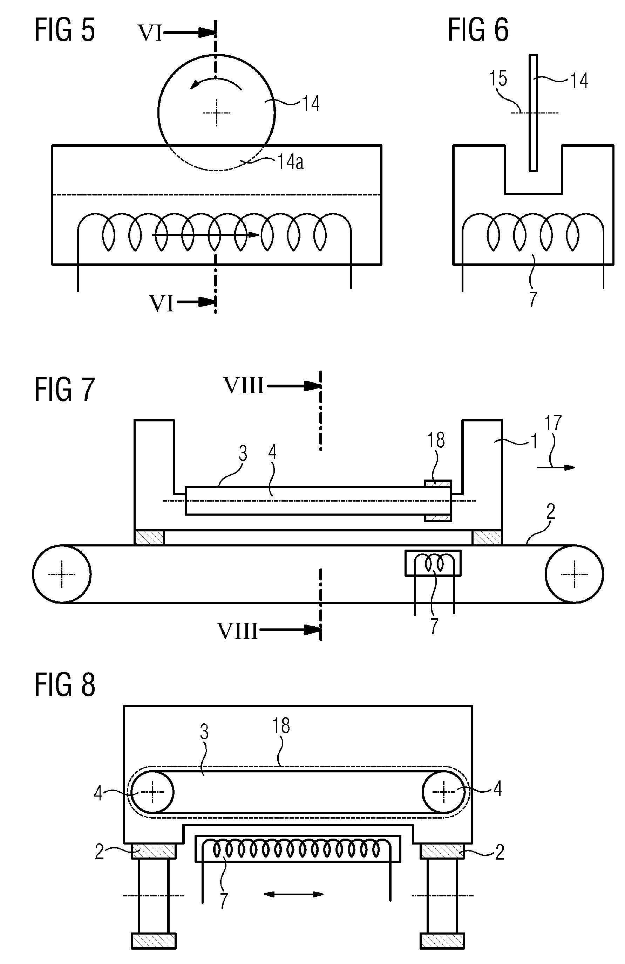

Eine andere Ausbildung des Antriebs ist in Figur 5 dargestellt. Hier besteht das Läuferelement aus einer Scheibe 14, die mit einem Segment 14a in den Bereich des Wanderfeldes der Erregerwicklung 7 hineinreicht und durch dieses angetrieben wird. Von der Achse 15 der Scheibe 14 wird das Antriebsmoment abgegriffen und über eine (nicht dargestellte) Getriebeverbindung auf die Umlenkwalze 4 des Tragbandes 3 übertragen. In allen dargestellten Fällen erfolgt der Antrieb zwischen dem stationären Antrieb 5 und dem Läuferelement 8 bzw. 14 berührungslos und damit verschleißfrei.

In Figur 7 ist eine etwas anders gestaltete Antriebsvorrichtung dargestellt, deren Erregerwicklung 16 unterhalb des Behälters 1 im Förderer 2 quer zu dessen Transportrichtung 17 angeordnet ist. Das auf dem Behälter 1 angeordnete Tragband 3, das, wie in den anderen Ausführungen, um die Umlenkwalzen 4 endlos geführt ist, ist in seinem Randbereich mit Läuferelementen 18 bestückt, die umlenkfähig um die Umlenkwalzen 4 mit dem Tragband 3 fest verbunden sind und von dem Wanderfeld der Erregerwicklung 16 derart angetrieben werden, dass sich das Tragband 3 um die Umlenkwalzen 4 bewegt. An der Be- und Endladestelle des Förderers 2 wird der Behälter 1 derart oberhalb der Erregerwicklung 16 positioniert, dass die Läuferelemente 18 des Tragbandes 3 in den Bereich des Wanderfelds gelangen und von diesem unmittelbar angetrieben werden. Auch hier erfolgt die Übertragung des Antriebsmomentes berührungslos, wie bei einem Linearmotor.

Die Figur 8 zeigt einen Schnitt durch die Anordnung nach Figur 7 entlang der Schnittlinie VIII-VIII. Gleiche Teile sind gleich bezeichnet. Mit dem Pfeil 19 ist kenntlich gemacht, dass hier, wie auch in den anderen Anordnungen, das Wanderfeld umkehrbar ist, in dem die Erregerwicklung 7 umgepolt wird. Auf diese Weise kann das Tragband 3 in beiden Richtungen angetrieben werden, so dass ein Be- und Entladen von bzw. nach beiden Seiten des Förderers 2 erfolgen kann.

## Patentansprüche

1. Behälterförderanlage zum Transportieren von Stückgütern, insbesondere von Gepäckstücken auf einer Förderbahn mit Trag- und Führungselementen für die Behälter und mindestens einer Endladestelle zum Entleeren des Stückgutes aus dem Behälter und/oder mindestens einer Beladestelle zum Beladen des Behälters mit dem Stückgut, wobei das Stückgut beim Transport auf einem endlosen Tragband aufliegt, das quer zur Transportrichtung des Behälters um beidseitig des Behälters angeordnete Umlenkwalze antreibbar geführt ist, und wobei zum Antreiben des Tragbandes im Bereich der Be- und/oder Endladestelle ein stationärer Antrieb vorgesehen ist, der zumindest während des Be- und/oder Endladevorganges mit einem am Behälter vorgesehen Antriebselement für das Tragband in Wirkverbindung steht,
**dadurch gekennzeichnet, dass**
als stationärer Antrieb (5) für das Tragband (3) in definierten Streckensegmenten jeweils mindestens eine ebene Erregerwicklung (7) zur Erzeugung eines elektrischen Wanderfelds installiert ist, das berührungslos ein auf dem Behälter (1) angeordnetes endlos umlaufendes Läuferelement (8, 14) treibt, welches seinerseits getrieblich mit dem Tragband (3) gekoppelt ist.

2. Behälterförderanlage zum Transportieren von Stückgütern nach Anspruch 1,
**dadurch gekennzeichnet, dass**
das Läuferelement als endlose Kette (10) ausgebildet ist, deren mindestens eines Kettentrum mit geringem Abstand zu der Erregerwicklung (7) durch das Wanderfeld um Umlenkräder (11, 12) geführt ist und dass mindestens eines der von der Kette (10) getriebenen Umlenkräder (11 oder 12) mit mindestens einer der Umlenkwalzen (4) des Tragbandes (3) in Getriebeverbindung steht.

3. Behälterförderanlage zum Transportieren von Stückgütern nach Anspruch 1,
**dadurch gekennzeichnet, dass**
das Läuferelement als Scheibe (14) ausgebildet ist, die um ihre horizontal und quer zu Wirkrichtung des Wanderfeldes ausgerichtete, mit dem Tragband (3) in Getriebeverbindung stehende Drehachse (15), antreibbar ist, wozu ein Abschnitt (14a) der Scheibe (14) in das Wanderfeld hineinragt.

4. Behälterförderanlage zum Transportieren von Stückgütern nach einem der Ansprüche 1 bis 3,
**dadurch gekennzeichnet, dass**
die Getriebeverbindung zwischen Läuferelement und Tragband (3) über einen Riemen- oder Kettentrieb(6) erfolgt.

5. Behälterförderanlage zum Transportieren von Stückgütern nach einem der Ansprüche 1 bis 3,
**dadurch gekennzeichnet, dass**
die Getriebeverbindung zwischen Läuferelement und Tragband (3) über ein Winkelgetriebe erfolgt.

6. Behälterförderanlage zum Transportieren von Stückgütern nach Anspruch 1 und 2,
**dadurch gekennzeichnet, dass**
das als Kette (10) ausgebildete Läuferelement mit auf den Kettengliedern fest angeordneten Schwertern (13) bestückt ist, die sich in der Umlaufebene der Kette (10) berührungslos in das Wanderfeld der Erregerwicklung (7) hinein erstrecken.

7. Behälterförderanlage zum Transportieren von Stückgütern nach einem der Ansprüche 1 bis 6,
**dadurch gekennzeichnet, dass**
die Richtung des Wanderfeldes und damit die Laufrichtung des Tragbandes (3) umkehrbar sind.

8. Behälterförderanlage zum Transportieren von Stückgütern nach einem der Ansprüche 1 bis 7,
**dadurch gekennzeichnet, dass**
das Wanderfeld unabhängig von der Transportgeschwindigkeit und dem Stillstand des Behälters (1) aktivierbar ist.

9. Behälterförderanlage zum Transportieren von Stückgütern nach einem der Ansprüche 1,
**dadurch gekennzeichnet, dass**
die als stationäres Antriebselement (5) für das Tragband (3) vorgesehene mindestens eine ebene Erregerwicklung (16) im Bereich der Be- und/oder Endladestelle unterhalb des zu be- bzw. entladenden Behälters (1) parallel zur Laufrichtung des Tragbandes (3) angeordnet ist und das Tragband (3) über in das Tragband (3) integrierte Läuferelemente (18) von dem richtungsumkehrbaren Wanderfeld antreibbar ist.

10. Behälterförderanlage zum Transportieren von Stückgütern nach Anspruch 1,
**dadurch gekennzeichnet, dass**
die in das Tragband (3) vorzugsweise in dessen Randbereich integrierten Läuferelemente (18) ferromagnetische Platten oder Magnete sind, die in das Wanderfeld der Erregerwicklung (16) hineinreichen.
